# EUROPEAN PATENT SPECIFICATION

(11) **EP 0 743 016 B1**
(45) Date of publication and mention of the grant of the patent: **19.12.2001**
(21) Application number: 96107778.1
(22) Date of filing: 15.05.1996
(51) Int. Cl.: A23K 1/16

(54) **Feed additive**
Futterzusatz
Additif alimentaire pour animaux

(30) Priority: 16.05.1995 JP 11622795
(43) Date of publication of application: 20.11.1996
(73) Proprietor: Ajinomoto Co., Inc., Tokyo 104 (JP)
(72) Inventor: Mori, Kazuhiko, c/o T.&E.L., Ajinomoto Co., Inc., Kawasaki-shi, Kanagawa-ken (JP); Osada, Hisashi, c/o T.&E.L., Ajinomoto Co., Inc., Kawasaki-shi, Kanagawa-ken (JP); Ishiguri, Toshihiko, c/o T.&E.L, Ajinomoto Co, Inc, Kawasaki-shi, Kanagawa-ken (JP); Ito, Hisao, c/o T.&E.L., Ajinomoto Co., Inc., Kawasaki-shi, Kanagawa-ken (JP)
(74) Representative: Strehl Schübel-Hopf & Partner

(56) References cited:
- EP-A- 0 491 638
- EP-A- 0 615 693
- EP-A- 0 678 246
- FR-A- 2 217 347
- US-A- 4 327 118
- PATENT ABSTRACTS OF JAPAN vol. 13, no. 532 (C-659), 28 November 1989 & JP-A-01 218558 (NIPPON SODA CO LTD), 31 August 1989,
- DATABASE WPI Week 9320 Derwent Publications Ltd., London, GB; AN 93-165415 XP002010450 & SU-A-1 735 365 (KIEV POLY) , 23 May 1992

## Description

### Industrial Field of the Invention

The present invention relates to a highly flowable and less-caking feed additive mainly comprising amino acids, and a process for producing the same. The feed additive mainly containing amino acids, that is the amino acid feed additive, is useful as a feed additive for animals, especially, for pigs.

### Prior Art

Amino acids for a feed additive such as, for example, L-lysine hydrochloride have been formed by performing crystallization in the final stage to separate pure crystals having a purity of not less than 99% and then drying them. It is not always necessary, however, to purify a feed additive to such a high purity. The feed additive mainly comprising amino acids has been also formed by directly drying a solution having an amino acid content with a purity as low as from 30 to 60% based on dry solid. The feed additive thus formed, however, has extremely poor handleability due to its hygroscopicity and caking tendency attributable thereto and it is not preferable as a product. Therefore, the feed additive mainly comprising amino acids generally contains amino acids purified by means of crystallization to form a product having good handleability.

On the other hand, since it is less necessary to purify the feed additive mainly comprising amino acids when used as a feed additive, methods of forming the feed additive by directly drying a fermentation broth have often been attempted [Soviet Patent No. 480,397, French Patent No. 2,217,347, etc). Powders thus formed, however, have extremely high hygroscopicity due to the many impurities contained in the broth which causes caking. Hence the powder often forms large lumps and becomes hard to handle.

In order to avoid caking due to hygroscopicity and to form granules with good handleability, a method has been performed in which a specific additive is mixed with a fermentation broth of amino acids, and then the mixture is dried. In French Patent No. 2,217,347 described above, for example, a dehydrating agent such as a powdery silica, expanded perlite, bone meal, rice bran, calcium carbonate or fluorine-free phosphate is mixed with a fermentation broth and dried. Even if these additives are mixed in an amount identical to or greater than that of the amino acids in the fermentation broth, no physically stable solid composition has been formed yet. In addition, Japanese Laid-Open Patent No. 56-35962 and U.S.Patent No. 4,327,118 propose a method of forming a solid composition of a mixture having low caking tendency in which inorganic additives such as lime and carbon dioxide, or carbon dioxide combined with lime and precipitated magnesium carbonate or precipitated magnesium carbonate are mixed with a condensed L-lysine fermentation broth, and then dried. The content of L-lysine in the solid composition formed by the method, however, is from about 10 to 35%. As a result of mixing additive to the fermentation broth in the method, the content of L-lysine as an effective ingredient in the formed composition is extremely reduced and is thus not practical.

Japanese Laid-Open Patent Publication No.05-192089(European Patent No. 533,039) discloses that granules with good handleability with a protein content which is lower than that in hitherto known products(obtained from fermentation broths) can be obtained directly, for example, by (spray) drying a fermentation broth, optionally with previous separation of part of the biomass. Moreover, Japanese Laid-Open Patent Publication No.06-296460 EP-A-615 693 discloses the method for preparing a granular product with fine particles which can be obtained by directly spray-drying a fermentation broth. However, the caking property or the tendency to agglomerate of the above-mentioned granular products stored during long time is not disclosed.

On the other hand, Japanese Laid-Open Patent Publication No. 59-169454 (European Patent No. 122,163) discloses that a stable dried product having reduced hygroscopicity can be formed by condensing and drying a fermentation broth of L-lysine formed under special fermentation conditions. However, since it is necessary to ferment under specific conditions, the operation is complicated and not practical.

### Problem to be Solved by the Invention

The object of the present invention is to provide a feed additive mainly comprising amino acids having an extremely reduced caking tendency by means of a simple and economical method without being greatly affected by the composition of the feed additive mainly comprising amino acids, and a process for producing the same.

### Means for Solving the Problem

In order to solve the foregoing problems, the inventors of the present invention found that the caking tendency of a feed additive is improved by mixing a granular feed additive mainly comprising amino acids with a caking preventive selected from the group consisting of silica gel, sucrose fatty acid ester, glycerin fatty acid ester, branched amino acids, calcium salts, magnesium salts, aluminum silicate, magnesium oxide, alumina, zeolite, diatomaceous silica, perlite, disodium hydrogen phosphate and mixtures thereof.

Namely, the present invention relates to an amino acid feed additive as disclosed in claim 1 and a process for its production as disclosed in claim 5.

According to the present invention, an amino acid feed additive improved in terms of caking tendency can be formed without being greatly affected by the composition of the granular feed additive mainly comprising amino acids.

In the present invention, a granular feed additive (granulated product to be added to a feed) mainly comprising amino acids is used. In the present invention, various kinds of amino acids or a mixture thereof which are useful in terms of animal physiology are used, such as glycine, L-alanine, L-valine, L-cysteine, L-phenyl alanine, and it is effective to use the process of the present invention for L-lysine, L-tryptophan or L-threonine or a mixture of two or more of these amino acids which are used in a large amount in a feed additive.

As a material for producing the granular feed additive, a powder and/or a solution containing the amino acids mentioned above is used, and the content of the amino acids is preferably from 30 to 90%, especially, from 30 to 60% in the free form on the basis of dried solid. The solution containing the amino acids is not particularly restricted with regard to the origin as long as it is an amino acid-containing liquid usable as a starting material for granulation. It is possible to use a fermentation broth of various kinds of amino acids or a liquid mixture thereof, a liquid obtained by removing microorganism cells from a fermentation broth by means of centrifugation and membrane-filtration, an amino acid-containing liquid formed by purifying a fermentation broth using various kinds of resins such as an ion-exchange resin by an ordinary method, a mother liquid obtained by separation of amino acids through crystallization or a condensed liquid of these amino acid-containing liquids. The powder containing the amino acids also is not particularly restricted with regard to the origin so long as it is an amino acid-containing powder usable as a starting material for granulation, thus, for instance, various kinds of amino acid-containing liquids dried or solidified by a spray dryer or the like can be used.

The content of a trace amount of non-targeted amino acid, sucrose, inorganic materials and organic acids contained as impurities in the fermentation broth of amino acids is different in every batch depending on the result of the fermentation, and the compositions are also different depending on the kinds of amino acids targeted. Although the hygroscopicity of the formed granular products is different depending on the impurities content, since the flowability of the feed additive is maintained at a satisfactory level by adding and mixing a caking preventive in the granular products in the production process of the present invention, a feed additive improved with respect to caking tendency can be formed unaffected by the hygroscopicity and caking tendency of the granular feed additive. Accordingly, an amino acid-containing liquid such as a fermentation broth containing a large amount of impurities other than amino acids can be used as a starting material for the granules used in the present invention with no strict control of the content of the ingredients.

The granular feed additive mainly comprising amino acids used in the present invention and the production process therefor are explained below.

The granular feed additive mainly comprising amino acids used in the present invention is not particularly limited so long as it is a granular product formed using an ordinary method. The content of amino acids is preferably from 30 to 90% by weight, in a free form on the dry basis, especially, from 30 to 60%. Since it is not necessary to control the hygroscopicity of the granular particles used in the present invention, the granulation method for the feed additive is not particularly limited. Various granules, for example, formed by directly drying and granulating the fermentation broth of amino acids can also be used.

To granulate an amino acid-containing liquid above-mentioned, some methods are available.

One is to dry the solution at first and then to granulate the dried solid subsequently. Another is to granulate the solution and to dry it simultaneously using seed crystals.

In the former way, the amino acid-containing liquid can be dried by means of spray-dryer, drum-dryer or the like. If the solid is in the form of fine particles, this solid can be granulated by means of some kinds of granulators (exmixing granulator, fluidized bed granulator, compression granulator and the like). By adding amino acid solution as binder(ex. broth itself, microorganisms-removed-broth and the like) to the solid, it becomes easier to granulate. If the solid dried from the amino acid-containing liquid is in the form of flakes, the way of granulation described above is available after pulverizing the flakes by a pin-mill or the like.

Among some kinds of fluidized bed granulators, a tumbling fluidized bed granulator is suitable for producing granules having high bulk density. It is easier to form suitable granules for the present invention by means of this granulator.

Even if the solid is in the form of flakes, a compression granulator can be used for granulating the solid. Due to the composition of the amino acid-containing liquid, the dried solid has sometimes tackiness. In case of using compression granulator, this property makes it easy to granulate.

On the other hand, for the simultaneous granulation and drying of an amino acid-containing liquid using seed crystals, a fluidized bed granulator can be used. Solids containing amino acid seed crystals are fluidized in the granulator initially and amino acid-containing liquid (ex. broth itself, microorganisms-removed-broth etc.) is sprayed into the fluidized bed and the solution is granulated and dried simultaneously. Solids containing the above-mentioned amino acid can be used as seed crystals. For example, the powder which is pulverized from a part of the product by a fluidized bed granulator can be used.

Among some kinds of fluidized bed granulators, a tumbling fluidized bed granulator is suitable for producing granules having high bulk density. So it is easier to form suitable granules for the present invention by means of this granulator.

Among the granular products thus formed, a granular product wherein the bulk density of the granules is from 400 to 800 kg/m³, and the content of the granules having a particle size of from 300 to 5000 µm amounts to 80 to 95% by weight, based on the total weight of the granules is applied for the present invention. Considering the handleability in use (solubility, dispersibility) as a feed additive, more preferable granular products have a bulk density of from 500 to 800 kg/m³ and have a content of granules having a particle size of from 400 to 1500 µm of from 80 to 95%. Since the resultant granular product does not yield dust, it is excellent in handleability.

The caking preventive used in the present invention and a method of mixing the same are explained next. The caking preventive used in the present invention is a material selected from the group consisting of silica gel, sucrose fatty acid ester, glycerin fatty acid ester, branched amino acid, calcium salt, magnesium salt, aluminum silicate, magnesium oxide, alumina, zeolite, diatomaceous silica, perlite, disodium hydrogen phosphate and mixtures thereof.

An amino acid feed additive which is free from caking of the granular materials has good flowability and has no greatly lowered content of amino acids as a main ingredient, can be obtained by mixing an extremely small amount of the fine particles of the caking preventive with the resultant granular feed additive mainly comprising amino acids. Mixing ratio of the caking preventive is preferably from 0.1 to 5.0%, more preferably from 0.1 to 2.0% to the weight of granular feed additive.

As an caking preventive, it is possible to use sucrose fatty acid ester (a mixture of 1 mol of sucrose bonded with one mol of stearic acid or palmitic acid and 1 mol of sucrose bonded with 2 mols of stearic acid or palmitic acid), a glycerin fatty acid ester (having a monoester (monoglyceride) content of from 40 to 60% and containing a fatty acid alkali salt) or a branched amino acid such as L-leucine, L-isoleucine or L-valine. The branched amino acid does not have hygroscopicity and caking tendency of its own and is effective as a caking preventive for use in the present invention.

As the calcium salt, organic or inorganic calcium salts can be used, and calcium monohydrogen phosphate, calcium dihydrogen phosphate, calcium carbonate, tricalcium phosphate, calcium silicate, calcium chloride anhydrous, calcium hydroxide, calcium gluconate or a mixture thereof are especially effective in the present invention.

As the magnesium salt, organic or inorganic magnesium salts can be used, and dried magnesium sulfate, magnesium carbonate, magnesium hydroxide, magnesium silicate, magnesium chloride or magnesium sulfate anhydrous or a mixture thereof are especially effective in the present invention.

Further, the inventors of the present invention have found that a more satisfactory caking preventive effect can be obtained if the particle size of the caking preventive is smaller when used in the same addition amount. Namely, the caking preventive has a 50-% mean diameter of from 1 to 50 µm, more preferably from 1 to 15 µm, for obtaining a satisfactory caking preventive effect and flowability.

When a calcium carbonate is used as the caking preventive, for example, a sample having a 50-% mean diameter of 13.32 µm (90-% diameter of 21.9 µm, 10-% diameter of 6.1 µm) is compared with a sample having a 50-% mean diameter of 6.8 µm (90-% diameter of 22.7 µm, 10-% diameter of 1.9 µm), and a satisfactory caking preventive effect can be obtained in the former, but a more satisfactory caking preventive effect can be obtained in the latter. In addition, since fine particule silica gel having a 50-% mean diameter of about 2 µm has a physically excellent fluidity of its own, excellent caking preventive effect can be realized. Details of the particle size analysis are described in "Ullmann's Enzyklopädie der technischen Chemie, Vol. 5, p. 727 (Fourth Eddition).

The caking preventive can be formed into fine particules and, in terms of particle size, can be reduced into a predetermined level easily and economically using various kinds of pulverizers such as a hammer mill, Fitz mill or pin mill. The caking preventive effect is remarkably improved by forming the caking preventive into fine particles of a predetermined particle size.

The required amount of caking preventive to be mixed varies with the diameter of granular feed additive. At a granule size distribution of the present invention, the mixing ratio of caking preventive from 0.1 to 5 % is adequate. For example, comparing the caking tendency of the granule mainly comprising L-lysine and the powder mainly comprising L-lysine made by spray drying, both are made from same L-Lysine fermentation broth, the granules showed lower caking tendency than powder with the same mixing ratio of caking preventive.

The caking preventive can be easily mixed into the granular feed additive using a commonly used powder agitating mixer such as a ribbon blender, a sigma-type kneader, a paddle mixer and a rocking mixer. When fine particules of the caking preventive are mixed, since the surface of the granular feed additive is covered like that in coating, it hardly peels off after mixing and is more effective.

### Examples

The present invention will be explained in more detail hereinafter with reference to examples.

### Example 1

Strains of Brevibacterium lactofermentum AJ 12593 (FERM BP-3240) were inoculated in a culture medium comprising 80g/L of waste molasses as a sucrose, 50g/L of ammonium sulfate, 1g/L of KH₂PO₄, 1g/L of MgSO₄7H₂O, 10 mg/L of soybean protein hydrolyzate (as nitrogen), 0.1 mg/L of thiamine hydrochloride, 50 g/L of calcium carbonate and 0.3 mg/L of biotin, then cultured while agitating at 31.5 °C for 72 hours to form an L-lysine fermentation broth. Then, the resultant fermentation broth was dried using a drum dryer to form 5 kg of a dried flaky product having the composition below.

| | |
|---|---|
| L-lysine | 50.9% |
| Other amino acids | 3.7% |
| Total nitrogen | 12.4% |
| Ammonia-form nitrogen | 0.2% |
| Bacterial cells | 13.4% |
| Water content | 8.0% |

A part of the dried flaky product was pulverized using a pin mill to form 750 g of a powder having a mean diameter of 100 µm. It was charged, for producing seed crystals, in an tumbling fluidized bed granulator (trade name: SFC-MINI, manufactured by Freund Industry Co.) and the resultant fermentation broth (the amount is 6 kg) was sprayed and granulated under the conditions below.

| | |
|---|---|
| Hot blow temperature | 100 °C |
| Temperature of fluidized bed | 45 to 50 °C |
| Exhaust valve graduation | 6 → 9 |
| Fluid valve graduation | 6 → 10 |
| Slit valve graduation | 10 |
| Broth feed amount (in a temperature-controlled fluidized bed) | 20 cc/min |
| Rotor r.p.m. | 400 RPM |
| Agitator r.p.m. | 1200 RPM |
| Lump breaker r.p.m. | 4000 RPM |

As a result, 1.47 kg of granules having a water content of 3.6% and 0.34 kg of a bag powder were obtained. The details are shown below.

| | |
|---|---|
| Mean diameter | D50 724 µm |
| | (D10 1064 µm) |
| | (D90 455 µm) |
| Bulk density | 610 kg/m³ |
| Water content | 3.6 % |
| L-lysine | 53.5 % |
| Other amino acids | 4.0 % |

1 kg of the resultant granules was dried for 60 minutes using a small-sized fluidizing dryer to reduce the water content to 2.3%. It was further sieved with a sieve to obtain granules having a particle size of from 500 µm to 1,000 µm.

The resultant sieved granules were divided into 30 g each in a vinylchloride bag, and 0.09 g of each additive (caking preventive) corresponding to 0.3% was added respectively. They were sufficiently mixed for 3 minutes after the addition. The caking preventives used are shown below.
Fine-particulate silica gel
L-leucine
L-isoleucine
L-valine
Sucrose fatty acid ester
Glycerine fatty acid ester
Calcium carbonate
Calcium monohydrogen phosphate
Calcium dihydrogen phosphate
Tricalcium phosphate
Calcium silicate
Calcium chloride anhydrous
Calcium hydroxide
Calcium gluconate
Magnesium oxide
Magnesium carbonate
Magnesium hydroxide
Magnesium sulfate anhydrous
Magnesium silicate
Magnesium chloride
Natural aluminum silicate
Disodium hydrogen phosphate
Alumina
Zeolite
Talc
Diatomaceous silica
Perlite

The flowability and caking tendency of the thus-obtained sieved granular samples were evaluated as follows. Namely, 5g of the sample was placed in a transparent styrol sample container having an inner diameter of about 3 cm, a height of about 6 cm and a capacity of about 40 cm³. This was stored with the lid opened for 168 hours in a thermostable and moisture-stable container in a saturated salt solution kept at 25C. The caking tendency of the sample in the container were measured.

The degree of the caking was evaluated and given five grades as follows.
- Extremely satisfactory (I):: The sample is fluidized only by inclining the container.
- Satisfactory (II):: Although most of the sample is fluidized when the container is inclined, agglomerates are found in portions such as the surface. All of the sample granules are fluidized if it is shaken.
- Partly caked (III) :: Partly caked. The sample does not move even if it is tapped softy.
- Caked entirely (IV):: caking due to hygroscopicity of sample granules is recognized, and even if the container is inclined the sample is solidified like cakes. When intense shock is exerted, the sample is collapsed.
- Strongly caked (V):: caking of the sample granules due to hygroscopicity is vigorous, and granules are strongly joined and do not collapse.

The evaluation of the caking-prevention effect is shown in Table 1. A remarkable caking-preventive effect was recognized compared with the granular particles to which no caking preventive added.

**Table 1**

| Result of evaluation of any caking-prevention effect | | | | | |
|---|---|---|---|---|---|
| caking preventive (0.3% added) | Humidity (25°C) | | | | |
| | 33% | 43% | 58% | 65% | 76% |
| No addition | II | IV | V | V | V |
| Fine-particule silica gel | I | II | III | IV | IV |
| L-leucine | I | II | III | IV | IV |
| L-isoleucine | I | II | III | IV | IV |
| L-valine | I | II | III | IV | IV |
| Glycerine fatty acid ester | I | I | II | III | IV |
| Sucrose fatty acid ester | II | III | IV | V | V |
| Calcium carbonate | I | II | III | IV | V |
| Calcium monohydrogen phosphate | II | III | IV | V | V |
| Calcium dihydrogen phosphate | II | III | IV | V | V |
| Tricalcium phosphate | I | II | IV | IV | V |
| Calcium silicate | II | III | IV | V | V |
| Calcium chloride anhydrous | II | III | IV | V | V |
| Calcium hydroxide | II | III | IV | V | V |
| Calcium gluconate | II | III | IV | V | V |
| Magnesium oxide | I | III | IV | V | V |
| Magnesium carbonate | I | II | III | IV | V |
| Magnesium hydroxide | II | II | IV | IV | V |
| Magnesium sulfate anhydrous | II | II | IV | IV | V |
| Magnesium silicate | II | III | IV | V | V |
| Magnesia chloride | II | II | IV | V | V |
| Natural aluminum silicate | II | II | IV | V | V |
| Disodium hydrogen phosphate | II | III | IV | V | V |
| Alumina | II | III | IV | V | V |
| Zeolite | II | III | IV | V | V |
| Diatomaceous silica | I | II | IV | V | V |
| Perlite | I | II | IV | V | V |

L-lysine granules formed in the same manner were sieved with a sieve to different granule sizes, and experiments were conducted for the caking-prevention effect of the same caking preventive depending on the difference of the particle size of the granules. The results are shown in Tables 2 and 3 below. Experiments were conducted using fine-particulate silica gel as the caking preventive and the amount thereof to be mixed was 0.3% and 0.5%.

It was found that the caking-prevention effect was increased as the particle size of the granules was larger in the case where the same amount of the caking preventive inhibitor was added.

**Table 2**

| Result of evaluation of the caking-prevention effect for each particle size (in the case of adding 0.3% silica gel based on the granules) | | | | | |
|---|---|---|---|---|---|
| Particle size of granules | Humidity (25°C) | | | | |
| | 33% | 43% | 58% | 65% | 76% |
| Spray dry (50 µm) | II | V | V | V | V |
| 125 - 425 µm | I | II | IV | V | V |
| 425 - 1,000 µm | I | II | III | IV | IV |
| 1,000 - 2,000 µm | I | I | II | II | V |

**Table 3**

| Result of evaluation of the caking-prevention effect for each particle size (in the case of adding 0.5% silica gel based on the granules) | | | | | |
|---|---|---|---|---|---|
| Particle size of granules | Humidity (25°C) | | | | |
| | 33% | 43% | 58% | 65% | 76% |
| Spray dry (50 µm) | II | III | V | V | V |
| 125 - 425 µm | I | II | III | V | V |
| 425 - 1,000 µm | I | II | III | III | IV |
| 1,000 - 2,000 µm | I | I | II | II | V |

### Example 2

2.6 kg of dried flaky products (water content 8%) obtained in Example 1 was pulverized using a pin-mill and then granulated using a mixing granulator (Rodige® mixer) with water as binder under the conditions below.

| | |
|---|---|
| Type | M-20 (drum capacity 20 L) |
| Charged amount | 2.6 kg (6L) |
| Shovel r.p.m. | 230 r.p.m. |
| Chopper r.p.m. | 3,000 r.p.m. |
| Mixing granulating time | 4 min. |

The particle size distribution of the resultant 2.4 kg of granular sample (bulk density 550 kg/m³) is shown below.

| | |
|---|---|
| 1 mm and more | 12% |
| 0.5 - 1mm | 43% |
| 0.25 - 0.5 mm | 21% |
| 0.1 - 0.25 mm | 17% |
| 0.1 mm pass | 7% |

The resultant product had a water content reduced to not more than 3%. The sample was sieved with a sieve and 0.09 g of calcium carbonate corresponding to 0.3% was added and mixed to 30 g of the sample having a particle size of from 425 µm to 1000 µm, then it was evaluated for its caking-preventive effect according to the method of Example 1. Calcium carbonate used is in reagent grade and whiton F®, and has a mean diameter as given below.

| Calcium carbonate | |
|---|---|
| Reagent grade | 50-% mean diameter 13.32 µm |
| Whiton F® | 50-% mean diameter 6.8 µm |

The results of the evaluation are given in Table 4. The caking-preventive effect could be recognized also with respect to the granules formed by different production processes. In addition, the caking-preventon effect could also be enhanced by reducing the particle size of the caking preventive.

**Table 4**

| Result of evaluation of caking-prevention effect | | | | | |
|---|---|---|---|---|---|
| Caking preventive (added 0.3%) | Humidity (25°C) | | | | |
| | 33% | 43% | 58% | 65% | 76% |
| No addition | II | IV | V | V | V |
| Calcium carbonate reagent grade | I | II | III | V | V |
| Calcium carbonate whiton F® | I | II | III | IV | V |

### Comparative example 1

2.6 kg of dried flaky products (water content 8%) obtained in Example 1 was pulverized using a pin-mill. 7.2 g of calcium carbonate (whiton F®) corresponding to about 0.3% was added and mixed to the resultant powdery product. The mixture was granulated using a mixing granulator (Rodige mixer) with water as binder under the conditions below.

| | |
|---|---|
| Type | M-20 (drum capacity 20 L) |
| Charged amount | 2.6 kg (6L) |
| Shovel r.p.m. | 230 r.p.m. |
| Chopper r.p.m. | 3,000 r.p.m. |
| Mixing granulating time | 4 min. |

The resultant product had a water content reduced to not more than 3%. The sample was sieved with sieves from 425 µm to 1000 µm, then it was evaluated for its caking-prevention effect according to the method of Example 1.

The results of the evaluation are given in Table 5. The caking degree of this sample is the same as of the sample to which no caking preventive is added in Example 2. It is found that the caking-preventive effect cannot be obtained if the caking preventive is added before granulating but can be obtained satisfactorily if the caking preventive is added after granulating.

**Table 5**

| Result of evaluation of caking-preventive effect | | | | | |
|---|---|---|---|---|---|
| Caking preventive (0.3% added) | Humidity (25°C) | | | | |
| | 33% | 43% | 58% | 65% | 76% |
| Calcium carbonate whiton F® (added before granulating) | II | IV | V | V | V |

### Example 3

A part of solids content such as microorganism cells was separated from the fermentation broth obtained in Example 1 using DeLaval-type centrifuge. A broth freed from a part of microorganism cells was formed by mixing the resultant broth from which microorganism cells were separated and a fermentation broth obtaind in Example 1 (mixing rate is 1 by 1). Then, the resultant broth freed from a part of microorganism cells was dried using a drum dryer to form 4.5 kg of a dried flaky product having the composition shown below.

| | |
|---|---|
| L-lysine | 55.3% |
| Other amino acids | 4.1% |
| Total nitrogen | 12.7% |
| Ammonia-form nitrogen | 0.2% |
| Microorganism cells | 6.8% |
| Water content | 7.0% |

A part of the dried flaky product was pulverized using a pin mill to form 750 g of a powder having a mean diameter of 120 µm. It was charged, as seed crystals, into a tumbling fluidized bed granulator(trade name: SFC-MINI, manufactured by Freund Industry Co.) and the resultant broth having separated a part of microorganism cells (the amount is 6 kg) was sprayed and granulated under the conditions below.

| | |
|---|---|
| Hot blow temperature | 100 C |
| Temperature of fluidized bed | 45 to 50 C |
| Exhaust valve graduation | 6 → 9 |
| Fluid valve graduation | 6 → 10 |
| Slit valve graduation | 10 |
| Broth feed amount | 20 cc/min |
| Rotor r.p.m. | 400 RPM |
| Agitator r.p.m. | 1200 RPM |
| Lump breaker r.p.m. | 4000 RPM |

As a result, 1.62 kg of granules having a water content of 3.2% and 0.23 kg of a bag powder were obtained. The details are shown below.

| | |
|---|---|
| Mean diameter | D50 705 µm |
| | (D10 1045 µm) |
| | (D90 415 µm) |
| Bulk density | 600 kg/m3 |
| Water content | 3.2 % |
| L-lysine | 58.2 % |
| Other amino acids | 4.3 % |

1 kg of the resultant granules was dried for 60 minutes using a small-sized fluidized bed dryer to reduce the water content to 2.1%. It was further sieved with a sieve to obtain granules having a particle size of from 500 µm to 1,000 µm.

Resultant sieved granules were divided into 30 g each in a vinylchloride bag, and 0.09 g of each additive (caking preventive) corresponding to 0.3% was added respectively. They were sufficiently mixed for 3 minutes after the addition. The caking preventives used are shown below.
Fine-particulate silica gel
Calcium carbonate
Magnesium carbonate

The evaluation of the caking-preventive effect is shown in Table 6. A remarkable caking-preventive effect was also recognized with the granules using the broth having separated a part of microorganism cells.

**Table 6**

| Result of evaluation of caking-prevention effect | | | | | |
|---|---|---|---|---|---|
| Caking preventive (0.3% added) | Humidity (25°C) | | | | |
| | 33% | 43% | 58% | 65% | 76% |
| No addition | II | IV | V | V | V |
| Fine-particulate silica gel | I | II | III | IV | IV |
| Calcium carbonate | I | II | III | IV | V |
| Magnesium carbonate | I | II | III | IV | V |

### Example 4

Strains of bacteria of Escherichia coli KB 862-pGH5 disclosed in International Patent Publication No. (WO 94-08031) were inoculated in a culture medium (pH 6.5) comprising 130g/L of glucose, 25g/L of ammonium sulfate, 12g/L of fumaric acid, 3ml/L of acetic acid, 1 g/L of KH2PO4,10 mg/L of MnSO47H2O, 1g/L of MgSO4 7H2O, 10mg/L of a soybean protein hydrolyzate (as nitrogen), 2 mg/L of thiamine hydrochloride, 50g/L of calcium carbonate and 0.05 mg/L of biotin, and cultured while agitating at 30C for 72 hours to form an L-tryptophan fermentation broth. Next, the resultant fermentation broth was dried using a laboratory mini-spray dryer to obtain 400 g of a powder having the composition below.

| | |
|---|---|
| L-tryptophan | 34.7 % |
| Other amino acid(s) | 5.4 % |
| Total nitrogen | 9.6 % |
| Ammonia form nitrogen | 2.8 % |
| Bacterial bodies | 18.3 % |
| Water content | 5.0 % |

The powder was charged, as seed crystals, into a tumbling fluidized bed granulator (trade name: SFC-MINI, manufactured by Freund Industry Co.), and 8 kg of the resultant L-tryptophan was sprayed and granulated under the conditions mentioned below.

| | |
|---|---|
| Hot blow temperature | 100 C |
| Temperature of fluidized bed | 45 - 50 C |
| Exhaust valve graduation | 6 → 9 |
| Fluid valve graduation | 6 → 10 |
| Slit valve graduation | 10 |
| Broth feed amount (in a temperature-controlled fluidized bed) | 10 cc/min |
| Rotor r.p.m. | 400 RPM |
| Agitator r.p,m. | 1200 RPM |
| Lump breaker r.p.m. | 4000 RPM |

As a result, 900 g of granules having a water content of 5.1% and 210g of a bag powder were obtained. Details are shown below.

| | |
|---|---|
| Mean diameter | D50 634 µm |
| | (D10 985 µm) |
| | (D90 385 µm) |
| Bulk density | 620 kg/m3 |
| Water content | 5.1 % |
| L-tryptophan | 37.3 % |
| Other amino acids | 5.6 % |

0.8 kg of the resultant granules were dried for 60 min. using a small-sized fluidized bed dryer to reduce the water content to 2.8%. They were sieved with a sieve from 425 µm - 1000 µm.

The resultant sieved granules were divided into 30g each in a vinylchloride bag, and 0.09g of an additive (agglomeration inhibitor) corresponding to 0.3% was added respectively. After the addition, each of the samples was mixed satisfactorily for 3 min. to coat the granules with the additive. The caking preventives used are shown below.
Fine particulate silica gel
L-leucine
L-isoleucine
L-valine
Calcium carbonate
Tricalcium phosphate
Calcium chloride anhydrous
Magnesium carbonate
Magnesium hydroxide
Anhydrous magnesium sulfate
Natural aluminum silicate
Disodium hydrogen phosphate

The flowability and caking tendency of the sieved granular samples were evaluated after being stored for 168 hours under the same conditions of humidity as those in Example 1. The results of the evaluation of any caking-preventive effect are shown in Table 7.

A caking-preventive effect was apparent compared with that of the sample granules to which no caking preventive was added.

**Table 7**

| Result of evaluation of caking-preventive effect | | | | | |
|---|---|---|---|---|---|
| Caking preventive (0.3% added) | Humidity (25°C) | | | | |
| | 33% | 43% | 58% | 65% | 76% |
| No addition | II | IV | V | V | V |
| Fine particulate silica gel | I | II | III | IV | IV |
| L-leucine | I | II | III | IV | V |
| L-isoleucine | I | II | III | IV | IV |
| L-valine | I | II | III | V | V |
| Calcium carbonate | I | II | III | IV | V |
| Tricalcium phosphote | I | II | IV | IV | V |
| Calcium chloride anhydrous | III | III | IV | V | V |
| Magnesium carbonate | I | II | III | IV | V |
| Magnesium hydroxide | II | II | IV | IV | V |
| Anhydrous magnesium sulfate | II | II | IV | IV | V |
| Natural aluminum silicate | II | II | IV | V | V |
| Disodium hydrogen phosphate | II | III | IV | V | V |

### Example 5

Strains of Escherichia coli BKIIM B-3996 as disclosed in U.S. Patent No. 5,175,107 were inoculated in a culture medium (pH 7.0) comprising 40g/L of sucrose, 5g/L of ammonium sulfate, 2g/L of KH2PO4, 20mg/L of MnSO47H2O, 20gm/L of FeSO4 7H2O, 0.4g/L of MgSO4 7H2O, 2g/L of yeast extract and 0.6g/L of NaCl, and cultured while agitating at 37 °C for 36 hours to form an L-threonine ferment broth. The resultant fermentation broth was dried using a laboratory mini spray dryer to form 500g of a powder having compositions given below.

| | |
|---|---|
| L-threonine | 47.5% |
| Other acids | 7.9% |
| Total nitrogen | 10.1% |
| Ammonium form nitrogen | 1.0% |
| Microorganism cells | 17.3% |
| Water content | 7.0% |

The resultant powder was charged, for a seed crystal, into an tumbling fluidized bed granulator (trade name: SFC-MINI, manufactured by Freund Industry Co.), and 6 kg of the resultant threonine broth was sprayed and granulated under the conditions mentioned below.

| | |
|---|---|
| Hot blow temperature | 100 C |
| Temperature of fluidized bed | 40 - 45 C |
| Exhaust valve graduation | 6 → 9 |
| Fluid valve graduation | 6 → 10 |
| Slit valve graduation | 10 |
| Broth feed amount (in a temperature-controlled fluidized bed) | 10 cm³/min |
| Rotor r.p.m. | 400 RPM |
| Agitator r.p,m. | 1200 RPM |
| Lump breaker r.p.m. | 4000 RPM |

As a result, 930 g of granules having a water content of 4.5% and 180g of a bag powder were obtained. Details are shown below.

| | |
|---|---|
| Mean diameter | D50 800 µm |
| | (D10 1120 µm) |
| | (D90 530 µm) |
| Bulk density | 540 kg/m³ |
| Moisture content | 5.9 % |
| L-threonine | 50.3 % |
| Other amino acids | 8.3 % |

0.8 kg of the sample was dried for 60 min. in a small-sized fluidized bed dryer to reduce the water content to 3.8%. It was sieved with a sieve from 425 µm to 1000 µm.

The resultant sieved granules (sieved granulated product) were divided into 30g each in a vinylchloride bag, and 0.09 g of an additive (caking preventive) corresponding to 0.3 % was added respectively. After the addition, each of them was mixed satisfactorily for 3 min. to coat the granules with the additive. The caking preventives used are given below.
Fine particule silica gel
L-leucine
L-isoleucine
L-valine
Calcium carbonate
Tricalcium phosphate
Calcium chloride anhydrous
Magnesium carbonate
Magnesium hydroxide
Anhydrous magnesium sulfate
Natural aluminum silicate
Disodium hydrogen phosphate

**Table 8**

| Result of evaluation for caking-preventive effect | | | | | |
|---|---|---|---|---|---|
| Caking preventive (0.3% added) | Humidity (25°C) | | | | |
| | 33% | 43% | 58% | 65% | 76% |
| No addition | II | IV | V | V | V |
| Fine particle silica gel | I | II | IV | IV | IV |
| L-leucine | I | II | III | IV | V |
| L-isoleucine | I | II | III | IV | IV |
| L-valine | I | II | IV | V | V |
| Calcium carbonate | I | II | IV | V | V |
| Tricalcium phosphote | I | II | IV | V | V |
| Calcium chloride anhydrous | III | III | IV | V | V |
| Magnesium carbonate | I | II | III | IV | V |
| Magnesium hydroxide | II | II | IV | IV | V |
| Anhydrous magnesium sulfate | II | II | IV | V | V |
| Natural aluminum silicate | II | II | IV | V | V |
| Disodium hydrogen phosphate | II | III | IV | V | V |

### Effect of the Invention

The feed additive of the present invention formed by mixing a granular feed additive mainly comprising amino acids with a trace amount of a caking preventive is excellent in the flowability, greatly reduced in terms of caking due to moisture absorption and is convenient to use and store.

## Claims

1. An amino acid feed additive obtainable by a process comprising mixing a granular feed additive containing from 30 to 90% by weight, on the dry basis, of amino acid(s) with fine particles of a caking preventive selected from the group consisting of silica gel, sucrose fatty acid ester, glycerin fatty acid ester, branched amino acid, calcium salt, magnesium salt, aluminum silicate, magnesium oxide, alumina, zeolite, diatomaceous silica, perlite, disodium hydrogen phosphate arid mixtures thereof, the mixing ratio of which is from 0.1 to 5% by weight to the granular feed additive **characterized in that** the bulk density of the granular feed additive is from 400 to 800 kg/m³, the content of the granular feed additive of particles having a particle size of from 300 to 5000 µm is from 80 to 95% by weight to the total weight of the granular feed additive, and that the fine particles of the caking preventive have a 50-% mean diameter of from 1 µm to 50 µm.

2. An amino acid feed additive according to claim 1, **characterized in that** the amino acid(s) is L-lysine, L-tryptophan, L-threonine or a mixture thereof.

3. An amino acid feed additive according to any of the claims 1 or 2 **characterized in that** the calcium salt is selected from calcium monohydrogen phosphate, calcium dihydrogen phosphate, calcium carbonate, tricalcium phosphate, calcium silicate, calcium chloride anhydrous, calcium hydroxide, calcium gluconate or a mixture thereof.

4. An amino acid feed additive according to any of the claims 1 or 2, **characterized in that** the magnesium salt is selected from dried magnesium sulfate, magnesium carbonate, magnesium hydroxide, magnesium silicate, magnesium chloride, magnesium sulfate anhydrous or a mixture thereof.

5. A process for producing amino acid feed additive according to any of the claims 1 to 4, comprising the following
- preparing a granular feed additive from a powder and/or a solution containing amino acid(s),
- mixing the granular feed additive with fine particles of a caking preventive.

## Patentansprüche

1. Aminosäurefuttermittelzusatzstoff, der durch ein Verfahren erhalten werden kann, welches das Mischen eines granulären Futterzusatzstoffs, der 30 bis 90 Gew.-%, auf Trockenbasis, Aminosäure(n) enthält, mit feinen Partikeln eines Mittels zum Verhindern des Verklumpens umfasst, welches aus der Gruppe ausgewählt ist, die aus Kieselgel, Saccharosefettsäureester, Glycerinfettsäureester, verzweigten Aminosäuren, Calciumsalz, Magnesiumsalz, Aluminiumsilicat, Magnesiumoxid, Aluminiumoxid, Zeolith, diatomeenartiges Siliciumdioxid, Perlit, Dinatriumhydrogenphosphat und Gemischen davon besteht, wobei dessen Anteil 0,1 bis 5 Gew.-% des granulären Futterzusatzstoffes ist, **dadurch gekennzeichnet, dass** die Schüttdichte des granulären Futterzusatzstoffs 400 bis 800 kg/m³ ist, der Gehalt im granulären Futterzusatzstoff an Teilchen mit einer Teilchengröße von 300 bis 5000 µm 80 bis 95 Gew.-%, bezogen auf das Gesamtgewicht des granulären Futterzusatzstoffs, ist und 50 % der feinen Teilchen des Mittels zum Verhindern des Verklumpens einen mittleren Durchmesser von 1 bis 50 um haben.

2. Aminosäurefuttermittelzusatzstoff nach Anspruch 1, **dadurch gekennzeichnet, dass** die Aminosäure(n) L-Lysin, L-Tryptophan, L-Threonin oder ein Gemisch davon ist bzw. sind.

3. Aminosäurefuttermittelzusatzstoff nach einem der Ansprüche 1 oder 2, **dadurch gekennzeichnet, dass** das Calciumsalz unter Calciummonohydrogenphosphat, Calciumdihydrogenphosphat, Calciumcarbonat, Tricalciumphosphat, Calciumsilicat, wasserfreiem Calciumchlorid, Calciumhydroxid, Calciumgluconat oder einem Gemisch davon ausgewählt ist.

4. Aminosäurefuttermittelzusatzstoff nach einem der Ansprüche 1 oder 2, **dadurch gekennzeichnet, dass** das Magnesiumsalz unter getrocknetem Magnesiumsulfat, Magnesiumcarbonat, Magnesiumhydroxid, Magnesiumsilicat, Magnesiumchlorid, wasserfreiem Magnesiumsulfat oder einem Gemisch davon ausgewählt ist.

5. Verfahren zur Herstellung einer Aminosäurefuttermittelzusammensetzung nach einem der Ansprüche 1 bis 4, welches die folgenden Stufen umfasst:
- Herstellen eines granulären Futterzusatzstoffs aus einem Pulver und/oder einer Lösung, die eine oder mehrere Aminosäuren enthält,
- Mischen des granulären Futterzusatzstoffs mit feinen Partikeln eines Mittels zur Verhinderung des Verklumpens.

## Revendications

1. Additif alimentaire d'aminoacide pouvant être obtenu par un procédé comprenant le mélange d'un additif alimentaire en granulés contenant de 30 à 90 % en poids, sur une base sèche, d'aminoacide(s) avec de fines particules d'un agent de prévention de prise en masse choisi parmi du gel de silice, un ester d'acide gras de saccharose, un ester d'acide gras de glycérine, un aminoacide ramifié, un sel de calcium, un sel de magnésium, un silicate d'aluminium, un oxyde de magnésium, de l'alumine, une zéolite, de la silice à diatomées, de la perlite, de l'hydrogénophosphate de disodium et des mélanges de ceux-ci, le rapport de mélange de celui-ci est de 0,1 à 5 % en poids par rapport à l'additif alimentaire en granulés, **caractérisé en ce que** la masse volumique apparente de l'additif alimentaire en granulés est comprise entre 400 et 800 kg/m³, la teneur de l'additif alimentaire en granulés des particules ayant une taille de particules de 300 à 5 000 µm est de 80 à 95 % en poids du poids total de l'additif alimentaire en granulés, et **en ce que** les fines particules de l'agent de prévention de prise en masse présentent un diamètre moyen à 50 % de 1 µm à 50 µm.

2. Additif alimentaire d'aminoacide selon la revendication 1, **caractérisé en ce que** l'aminoacide (les aminoacides) est (sont) la L-lysine, le L-tryptophane, la L-thréonine ou un mélange de ceux-ci.

3. Additif alimentaire d'aminoacide selon l'une quelconque des revendications 1 ou 2, **caractérisé en ce que** le sel de calcium est choisi parmi le monohydrogénophosphate de calcium, le dihydrogénophosphate de calcium, le carbonate de calcium, le phosphate de tricalcium, le silicate de calcium, le chlorure de calcium anhydre, l'hydroxyde de calcium, le gluconate de calcium ou un mélange de ceux-ci.

4. Additif alimentaire d'aminoacide selon l'une quelconque des revendication 1 ou 2, **caractérisé en ce que** le sel de magnésium est choisi parmi du sulfate de magnésium, du carbonate de magnésium, de l'hydroxyde de magnésium, du silicate de magnésium, du chlorure de magnésium séchés, du sulfate de magnésium anhydre ou un mélange de ceux-ci.

5. Procédé pour la production d'un additif alimentaire d'aminoacide selon l'une quelconque des revendications 1 à 4, comprenant les étapes suivantes :
- de préparation d'un additif alimentaire en granulés à partir d'une poudre et/ou d'une solution contenant un (des) aminoacide(s),
- de mélange de l'additif alimentaire en granulés avec de fines particules d'un agent de prévention de prise en masse.
